# EUROPÄISCHE PATENTSCHRIFT

(11) **EP 1 112 016 B1**
(45) Veröffentlichungstag und Bekanntmachung des Hinweises auf die Patenterteilung: **27.11.2002**
(21) Anmeldenummer: 99946139.5
(22) Anmeldetag: 07.09.1999
(51) Int. Cl.: A47L 15/42, A47L 15/46

(54) **VERFAHREN ZUM BETREIBEN EINER HAUSHALT-GESCHIRRSPÜLMASCHINE UND HAUSHALT-GESCHIRRSPÜLMASCHINE ZUR DURCHFÜHRUNG DES VERFAHRENS**
METHOD FOR OPERATING A DOMESTIC DISHWASHER AND DOMESTIC DISHWASHER FOR CARRYING OUT THIS METHOD
MODE DE FONCTIONNEMENT D'UN LAVE-VAISSELLE DOMESTIQUE ET LAVE-VAISSELLE DOMESTIQUE CORRESPONDANT

(30) Priorität: 11.09.1998 DE 19841694
(43) Veröffentlichungstag der Anmeldung: 04.07.2001
(73) Patentinhaber: BSH Bosch und Siemens Hausgeräte GmbH, 81669 München (DE)
(72) Erfinder: ROSENBAUER, Michael, D-86756 Reimlingen (DE); REITER, Bruno, D-73450 Neresheim-Kösingen (DE); HERING, Reinhard, D-89438 Holzheim (DE)
(86) Internationale Anmeldenummer: EP9906595
(87) Internationale Veröffentlichungsnummer: WO00015096

(56) Entgegenhaltungen:
- EP-A- 0 326 893
- EP-A- 0 721 761
- US-A- 5 330 580

## Beschreibung

Die Erfindung betrifft ein Verfahren zum Betreiben einer Haushalt-Geschirrspülmaschine und eine Haushalt-Geschirrspülmaschine zur Durchführung des Verfahrens mit einem Spülbehälter, der über eine mit einem Einlaßventil versehene Frischwasserzuleitung befüllt wird, mit einer Umwälzpumpe, die ansaugseitig mit dem Spülbehälter und druckseitig mit wenigstens einer Sprüheinrichtung verbunden ist, mit einer Entleerungspumpe, die ansaugseitig mit dem Spülbehälter und druckseitig mit einer Ablaufleitung verbunden ist und mit einem Programmsteuergerät, das auch Steuereinrichtungen zum Steuern der Pumpen beinhaltet. Ein solches Verfahren bzw. Geschirrspülmaschine ist aus der EP-A-0 721 761 bekannt.

Ein weiteres Verfahren und eine Haushalt-Geschirrspülmaschine der eingangs genannten Art ist z.B. aus der DE-OS 20 13 716 bekannt. Bei dieser Haushalt-Geschirrspülmaschine ist in der Druckleitung der Umwälzpumpe eine Druckmeßeinrichtung angeordnet, die während des Betriebes der Umwälzpumpe das Einlaßventil öffnet und geöffnet hält, sobald und solange ein vorgesehener Druck in der Druckleitung der Umwälzpumpe unterschritten ist. Diese Maßnahme dient bei der DE-OS 20 13 716 zur Reinigung einer der Umwälzpumpe vorgeschalteten Siebanordnung, die bei Ablagerung von Verschmutzungen einen Druckabfall in der Druckleitung der Umwälzpumpe verursacht Durch das nun folgende Öffnen des Einlaßventiles wird Frischwasser bis zu einem oberen vorbestimmten Niveau zugeführt und dann durch Betrieb der Entleerungspumpe bis zu einem unteren vorbestimmten Niveau wieder abgepumpt. Sollte der Druck in der Druckleitung der Umwälzpumpe immer noch niedriger sein als der vorbestimmte Druck, wird der Vorgang wiederholt. Durch dieses Wechselspiel wird die Siebanordnung freigespült.

Aus der DE-OS 26 46 383 ist ein weiteres Verfahren und eine weitere Haushalt-Geschirrspülmaschine der eingangs genannten Art bekannt, die ebenfalls in der Druckleitung der Umwälzpumpe eine Druckmeßeinrichtung aufweist, die während des Betriebes der Umwälzpumpe das Einlaßventil öffnet und geöffnet hält, sobald und solange ein vorgesehener Druck in der Druckleitung der Umwälzpumpe unterschritten ist, was der selbsttätigen Anpassung der Spülflüssigkeitsmenge an die aufgenommene Schmutzmenge dient, d.h. bei durch Schmutzaufnahme dickflüssigerer Spülflüssigkeit sinkt der Förderdruck der Umwälzpumpe ab, was zu einem weiteren Befüllen mit Flüssigkeit, d.h. zum Verdünnen der Spülflüssigkeit führt. Wenn ein Maximalniveau erreicht ist, ohne daß der Förderdruck der Umwälzpumpe den vorbestimmten Druck erreicht hat, so wird mit der Entleerungspumpe Flüssigkeit bis zu einem Minimalniveau abgepumpt und dann das Einlaßventil solange geöffnet gehalten bis der Förderdruck der Umwälzpumpe den vorbestimmten Druck erreicht hat.

Es sind aber auch Verfahren und Haushalt-Geschirrspülmaschinen bekannt, bei denen ein vorbeschriebener Teilaustausch der Spülflüssigkeit in bestimmten Teilprogrammschritten oder zwischen Teilprogrammschritten fest vorgesehen ist, z.B. DE-OS 42 43 868. Dabei kommt es durch das vorbestimmte Maximal- und Minimalniveau zu einem unnötigem Wasser- und Energieverbrauch, da unterschiedliche Teilprogrammschritte mit unterschiedlichen Flüssigkeitsmengen betrieben werden und die Teilaustauschflüssigkeitsmenge diesen unterschiedlichen Flüssigkeitsmengen nicht angepaßt werden kann.

Der Erfindung liegt daher die Aufgabe zugrunde, bei einem Verfahren zum Betreiben einer Haushalt-Geschirrspülmaschine und bei einer Haushalt-Geschirrspülmaschine zur Durchführung des Verfahrens der eingangs genannten Art auf einfache Art und Weise eine Möglichkeit zu schaffen, einen Teilaustausch der Spülflüssigkeit ohne einem unnötigem Wasser- und Energieverbrauch durchzuführen.

Diese Aufgabe wird für das Verfahren erfindungsgemäß dadurch gelöst, daß bei einem Teilaustausch der Spülflüssigkeit beide Pumpen betrieben werden, und daß mittels der Drehzahl der in ihrer Drehzahl veränderbaren Umwälzpumpe die abzupumpende und danach wieder einzufüllende Spülflüssigkeitsmenge festgelegt wird.

Die Aufgabe für die Haushalt-Geschirrspülmaschine zur Durchführung des erfindungsgemäßen Verfahrens wird erfindungsgemäß dadurch gelöst, daß die Umwälzpumpe einen Drehzahlsensor aufweist und in ihrer Drehzahl veränderbar ist, und daß das Programmsteuergerät so ausgebildet ist, daß während des Betriebes der Umwälzpumpe aufgrund der Signale des Drehzahlsensors das Einlaßventil geöffnet und/oder geschlossen und/oder die Entleerungspumpe in Betrieb gesetzt oder ausgeschaltet wird, und daß bei einem Teilaustausch der Spülflüssigkeit beide Pumpen betrieben werden, und daß mittels der Drehzahl der Umwälzpumpe die abzupumpende und/oder die einzufüllende Spülflüssigkeitsmenge festgelegt wird.

Eine niedrige Drehzahl der Umwälzpumpe bewirkt, daß in dem Ansaugraum des Spülbehälters - dem sogenannten Pumpentopf - ein hohes Flüssigkeitsniveau herrscht, d.h. daß sich eine große Flüssigkeitsmenge ansammelt. Entsprechend bewirkt eine hohe Drehzahl der Umwälzpumpe, daß in dem Pumpentopf ein niedriges Flüssigkeitsniveau herrscht, d h. daß sich eine kleine Flüssigkeitsmenge ansammelt. Da die bei einem Teilaustausch der Spülflüssigkeit abzupumpende und dann wieder aufzufullende Teilmenge der sich im Pumpentopf angesammelten Flüssigkeitsmenge entnommen und wieder zugeführt wird, ist damit neben der Gesamtflüssigkeitsmenge in jedem Teilprogrammschritt auch diese Teilaustauschmenge durch die in der Drehzahl veränderbare Umwälzpumpe einstellbar und der jeweiligen verwendeten Flüssigkeitsmenge in den einzelnen Teilprogrammschritten anpaßbar. Bei der Entleerung der Teilmenge sinkt die Flüssigkeitsmenge ab. Dies bewirkt ein Öffnen des Einlaßventiles und ein Abschalten der Entleerungspumpe, so daß neue Flüssigkeit einströmen kann, bis die Umwälzpumpe wieder rund läuft, d.h. bis keine Luft mehr angesaugt wird. Der Drehzahlsensor meldet dieses und das Einlaßventil wird wieder geschlossen Somit wird nur entsprechend der Drehzahl der Umwälzpumpe eine dem Teilprogrammschritt angepaßte Flüssigkeitsmenge entnommen und wieder zugeführt. Mit der Erfindung ist bei einem Verfahren zum Betreiben einer Haushalt-Geschirrspülmaschine und bei einer Haushalt-Geschirrspulmaschine zur Durchführung des Verfahrens der eingangs genannten Art auf einfache Art und Weise eine Möglichkeit geschaffen, einen Teilaustausch der Spülflüssigkeit ohne einem unnötigem Wasser- und Energieverbrauch durchzuführen.

Nach einer bevorzugten Ausführungsform der Erfindung wird bei einem Teilaustausch der Spülflüssigkeit aufgrund der Signale des Drehzahlsensors die zusätzlich zu der sich in Betrieb befindlichen Umwälzpumpe betriebene Entleerungspumpe abschaltet und das Einlaßventil geöffnet und wird aufgrund der Signale des Drehzahlsensors das Einlaßventil wieder geschlossen. Bei der Entleerung der Teilmenge sinkt die Flüssigkeitsmenge solange ab, bis die Umwälzpumpe nicht mehr rund läuft, d.h. bis Luft mit angesaugt wird. Dies bewirkt eine Veränderung der Drehzahl der Umwälzpumpe, die von dem Drehzahlsensor gemeldet wird und die zu dem Öffnen des Einlaßventiles und dem Abschalten der Entleerungspumpe führt, so daß neue Flüssigkeit einströmen kann, bis die Umwälzpumpe wieder rund läuft, d.h. bis keine Luft mehr angesaugt wird. Der Drehzahlsensor meldet dieses und das Einlaßventil wird wieder geschlossen Somit wird nur entsprechend der Drehzahl der Umwälzpumpe eine dem Teilprogrammschritt angepaßte Flüssigkeitsmenge entnommen und wieder zugeführt. Durch die ausschließliche Steuerung über den Drehzahlsensor wird die zusätzliche Anbringung von Füllstandssensoren vermieden, was zu einer wesentlichen Vereinfachung des konstruktiven und steuerungsmäßigen Aufwandes und damit zu einer Vergünstigung der Kosten führt.

Nach einer vorteilhaften Ausführungsform der Erfindung begrenzt ein Füllstandssensor die abzupumpende Flüssigkeitsmenge, wobei die zusätzlich zu der von dem Füllstandssensor begrenzten Flüssigkeitsmenge vorhandene, abzupumpende Spülflüssigkeitsmenge mittels der Drehzahl der Umwälzpumpe festgelegt wird. Durch die Verwendung eines ohnehin vorhandenen Füllstandssensors für die Minimalfüllmenge wird der konstruktive und steuerungsmäßigen Aufwand nochmals verringert und damit eine weitere Vergünstigung der Kosten erreicht.

Die Erfindung wird nachstehend anhand dem in der Zeichnung dargestellten Ausführungsbeispiel erläutert. Es zeigen
- Fig. 1: eine schematische Darstellung einer erfindungsgemäßen Haushalt-Geschirrspülmaschine zur Durchführung des erfindungsgemäßen Verfahrens nach einer bevorzugten Ausführungsform und
- Fig. 2: eine schematische Darstellung einer erfindungsgemäßen Haushalt-Geschirrspülmaschine zur Durchführung des erfindungsgemäßen Verfahrens nach einer weiteren vorteilhaften Ausführungsform.

Bei beiden gezeigten Ausführungsformen sind gleiche Teile mit gleichen Bezugszeichen bezeichnet.

Der Betrieb der erfindungsgemäßen, nicht näher erläuterten Haushalt-Geschirrspülmaschine 1, 1a wird durch ein Programmsteuergerät 2 gesteuert. Die Haushalt-Geschirrspülmaschine 1, 1a weist einen durch eine frontseitige, um eine horizontale Achse verschwenkbare Tür 3 verschließbaren Spülbehälter 4 auf. Das zu reinigende Spülgut wird in, in den gezeigten Ausführungsbeispielen zwei, in dem Spülbehälter 4 angeordnete Geschirrkörbe 5, 6 eingefüllt. Jeder Geschirrkorb 5, 6 mit dem zu reinigenden Spülgut wird von einer zugeordneten Sprüheinrichtung 7, 8 mit mittels einer an einen, im untersten Bereich des Spülbehälters 4 angeordneten Pumpentopf 9 ansaugseitig angeschlossenen Umwälzpumpe 10 druckseitig geförderten Spülflüssigkeitsmenge beaufschlagt, wobei die Spülflüssigkeitsmenge in verschiedenen Spülprogrammteilschritten mittels einer geeigneten Heizeinrichtung, in den Ausführungsbeispielen mittels eines Durchlauferhitzers 11 erwärmt und in verschiedenen Spülprogrammteilschritten mittels entsprechenden Zugabeeinrichtungen mit Zusätzen, wie Reinigungsmittel oder Klarspülmittel angereichert werden kann Zur Entleerung dient eine ebenfalls an den, im untersten Bereich des Spülbehälters 4 angeordneten Pumpentopf 9 ansaugseitig angeschlossene Entleerungspumpe 12. Die Entleerungspumpe 12 ist druckseitig mit einer Ablaufleitung 15 verbunden. Eine Anordnung zur Steuerung der vorgenannten Umwälzpumpe 10 und Entleerungspumpe 12 ist in dem Programmsteuergerät 2 integriert. Der Spülbehälter wird über eine mit einem Einlaßventil 16 versehene Frischwasserzuleitung 17 befüllt.

Bei einem Teilaustausch der Spülflüssigkeit werden erfindungsgemäß beide Pumpen 10, 12 betrieben, wobei mittels der Drehzahl der Umwälzpumpe 10, die in ihrer Drehzahl veränderbar ist, erfindungsgemäß die abzupumpende und danach wieder einzufüllende Spülflüssigkeitsmenge festgelegt wird, wie weiter unten noch näher erläutert wird. Erfindungsgemäß weist die Umwälzpumpe 10 weiterhin einen Drehzahlsensor 18 auf. Zur Festlegung der abzupumpenden und der wieder aufzufüllenden Spülflüssigkeitsmenge wird aufgrund der Signale des Drehzahlsensors 18 während des Betriebes der Umwälzpumpe 10 bei der erfindungsgemäßen Haushalt-Geschirrspülmaschine 1, 1a das Einlaßventil 16 geöffnet und/oder geschlossen und/oder die Entleerungspumpe 12 in Betrieb gesetzt oder ausgeschaltet.

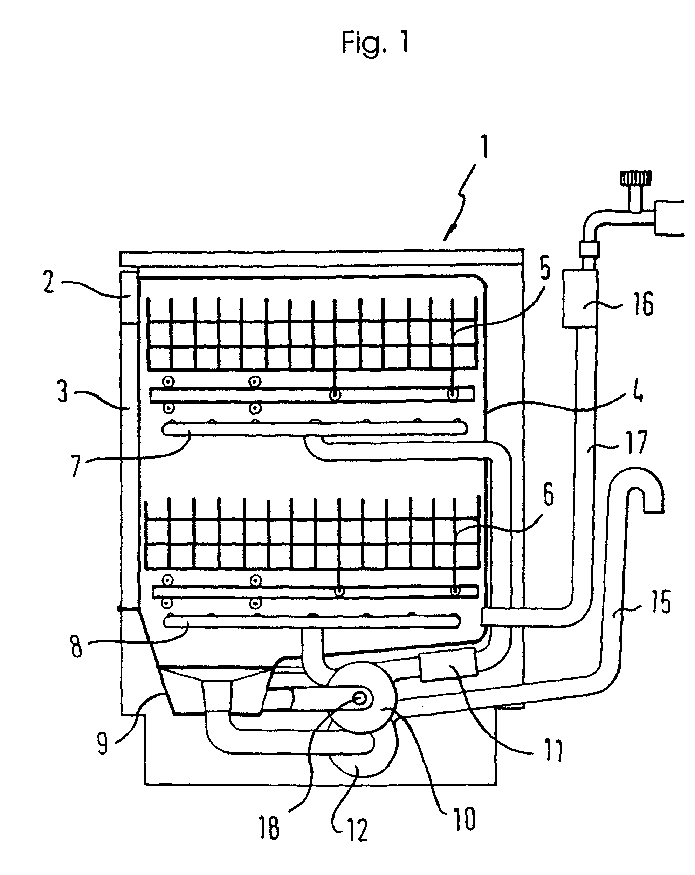

In der in Fig. 1 gezeigten, bevorzugten Ausführungsform wird bei einem Teilaustausch der Spülflüssigkeit aufgrund der Signale des Drehzahlsensors 18 die zusätzlich zu der sich in Betrieb befindlichen Umwälzpumpe 10 betriebene Entleerungspumpe 12 abschaltet und das Einlaßventil 16 geöffnet und aufgrund der Signale des Drehzahlsensors 18 das Einlaßventil 16 wieder geschlossen. Ein Teilaustausch der Spülflüssigkeit in einem Teilprogrammschritt eines Spülprogrammes bei der Haushalt-Geschirrspülmaschine 1 nach der in Fig. 1 gezeigten, bevorzugten Ausführungsform wird erfindungsgemäß dadurch eingeleitet, daß zusätzlich zu der üblicherweise schon in Betrieb befindlichen Umwälzpumpe 10 auch die Entleerungspumpe 12 eingeschaltet wird Dadurch wird nun aus dem Pumpentopf 9 Spülflüssigkeit abgepumpt. Dieser Abpumpvorgang findet so lange statt, bis der Drehzahlsensor 18 der Umwälzpumpe 10 feststellt, daß die Umwälzpumpe 10 unrund läuft, d.h., daß sie Luft ansaugt, was sich als meßbare Drehzahlschwankungen auswirkt. Nun wird die Entleerungspumpe 12 abgeschaltet und das Einlaßventil 16 geöffnet. Dieses bleibt so lange geöffnet, bis der Drehzahlsensor 18 der Umwälzpumpe 10 feststellt, daß die Umwälzpumpe 10 wieder rund läuft, d.h., daß sie keine Luft mehr ansaugt. Die Spülflüssigkeitsmenge, die bei diesem Verfahren abgepumpt und wieder ersetzt wird, wird durch die Drehzahl der Umwälzpumpe 10 bestimmt. Eine niedrige Drehzahl der Umwälzpumpe 10 bewirkt, daß in dem Pumpentopf 9 ein hohes Flüssigkeitsniveau herrscht, d h. daß sich eine große Flüssigkeitsmenge ansammelt Entsprechend bewirkt eine hohe Drehzahl der Umwälzpumpe 10, daß in dem Pumpentopf 9 ein niedriges Flüssigkeitsniveau herrscht, d.h. daß sich eine kleine Flüssigkeitsmenge ansammelt Diese Drehzahl der Pumpe ist in jedem Teilprogrammschritt des Spülprogrammes durch das Programmsteuergerät 2 angesteuert, so daß auch beim Teilaustausch der Spülflüssigkeit nur die entsprechende Teilmenge ausgetauscht wird. Sollte der Austausch einer anderen als der der im Teilprogrammschritt eingestellten Drehzahl der Umwälzpumpe 10 entsprechenden Teilmenge gewünscht sein, so wird die Drehzahl der Umwälzpumpe 10 vom Programmsteuergerät 2 entsprechend verändert.

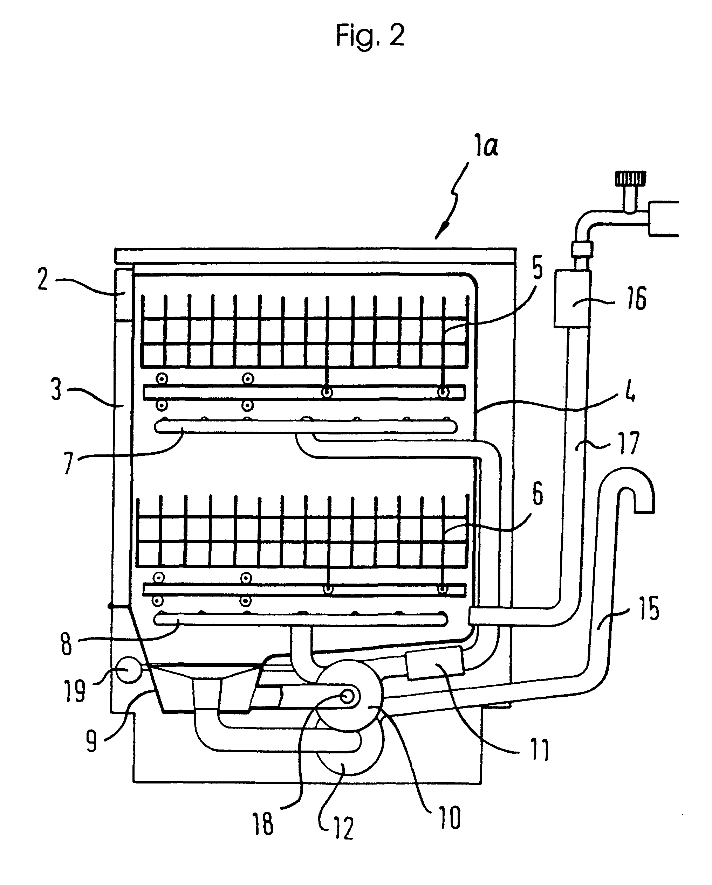

In der in Fig. 2 gezeigten, weiteren vorteilhaften Ausführungsform weist die Haushalt-Geschirrspülmaschine 1a einen Füllstandssensor 19 auf, mittels dem bei einem Teilaustausch der Spülflüssigkeit die abzupumpende Flüssigkeitsmenge begrenzt wird, wobei die zusätzlich zu der von dem Füllstandssensor 19 begrenzten Flüssigkeitsmenge vorhandene, abzupumpende Spülflüssigkeitsmenge mittels der Drehzahl der Umwälzpumpe 10 festgelegt wird. Ein Teilaustausch der Spülflüssigkeit in einem Teilprogrammschritt eines Spülprogrammes bei der Haushalt-Geschirrspülmaschine 1a nach der in Fig. 2 gezeigten, weiteren vorteilhaften Ausführungsform wird erfindungsgemäß wie bei der Ausführungsform nach Fig. 1 dadurch eingeleitet, daß zusätzlich zu der üblicherweise schon in Betrieb befindlichen Umwälzpumpe 10 auch die Entleerungspumpe 12 eingeschaltet wird. Dadurch wird nun aus dem Pumpentopf 9 Spülflüssigkeit abgepumpt. Dieser Abpumpvorgang findet so lange statt, bis der Füllstandssensor 19 das Erreichen des unteren Füllstandes anzeigt, auf den er eingestellt ist. Nun wird die Entleerungspumpe 12 abgeschaltet und das Einlaßventil 16 geöffnet. Dieses bleibt so lange geöffnet, bis der Drehzahlsensor 18 der Umwälzpumpe 10 feststellt, daß die Umwälzpumpe 10 wieder rund läuft, d.h., daß sie keine Luft mehr ansaugt, was sich als Einstellen einer gleichmäßigen Drehzahl auswirkt. Auch die Spülflüssigkeitsmenge, die bei diesem Verfahren abgepumpt und wieder ersetzt wird, wird wie nach der in Fig 1 gezeigten Ausführungsform durch die Drehzahl der Umwälzpumpe 10 bestimmt. Eine niedrige Drehzahl der Umwälzpumpe 10 bewirkt, daß in dem Pumpentopf 9 ein hohes Flüssigkeitsniveau herrscht, d h. daß sich eine große Flüssigkeitsmenge ansammelt, d.h daß sich oberhalb des Flüssigkeitsniveaus des Füllstandssensors 19 ein verhältnismäßig hohes Flüssigkeitsniveau einstellt. Entsprechend bewirkt eine hohe Drehzahl der Umwälzpumpe 10, daß in dem Pumpentopf 9 ein niedriges Flüssigkeitsniveau herrscht, d.h. daß sich eine kleine Flüssigkeitsmenge ansammelt, d.h. daß sich oberhalb des Flüssigkeitsniveaus des Füllstandssensors 19 ein verhältnismäßig kleines Flüssigkeitsniveau einstellt. Diese Drehzahl der Pumpe ist in jedem Teilprogrammschritt des Spülprogrammes durch das Programmsteuergerät 2 angesteuert, so daß auch beim Teilaustausch der Spülflüssigkeit nur die entsprechende Teilmenge ausgetauscht wird. Sollte der Austausch einer anderen als der der im Teilprogrammschritt eingestellten Drehzahl der Umwälzpumpe 10 entsprechenden Teilmenge gewünscht sein, so wird, wie bei dem Verfahren nach Fig. 1, die Drehzahl der Umwälzpumpe 10 vom Programmsteuergerät 2 entsprechend verändert.

Wie mit beiden Ausführungsformen gezeigt, ist mit der Erfindung bei einem Verfahren zum Betreiben einer Haushalt-Geschirrspülmaschine 1, 1a und bei einer Haushalt-Geschirrspülmaschine 1, 1a zur Durchführung des Verfahrens der eingangs genannten Art auf einfache Art und Weise eine Möglichkeit geschaffen, einen Teilaustausch der Spülflüssigkeit ohne einem unnötigem Wasser- und Energieverbrauch durchzuführen.

## Patentansprüche

1. Verfahren zum Betreiben einer Haushalt-Geschirrspülmaschine mit einem Spülbehälter (4), der über eine mit einem Einlaßventil (16) versehene Frischwasserzuleitung (17) befüllt wird, mit einer Umwälzpumpe (10), die ansaugseitig mit dem Spülbehälter (4) und druckseitig mit wenigstens einer Sprüheinrichtung (7, 8) verbunden ist, mit einer Entleerungspumpe (12), die ansaugseitig mit dem Spülbehälter (4) und druckseitig mit einer Ablaufleitung (15) verbunden ist und mit einem Programmsteuergerät (2), das auch Steuereinrichtungen zum Steuern der Pumpen (10, 12) beinhaltet,
**dadurch gekennzeichnet,**
**daß** bei einem Teilaustausch der Spülflüssigkeit beide Pumpen (10, 12) betrieben werden, und daß mittels der Drehzahl der in ihrer Drehzahl veränderbaren Umwälzpumpe (10) die abzupumpende und danach wieder einzufüllende Spülflüssigkeitsmenge festgelegt wird.

2. Verfahren nach Anspruch 1, **dadurch gekennzeichnet, daß** bei einem Teilaustausch der Spülflüssigkeit aufgrund der Signale eines Drehzahlsensors (18) der Umwälzpumpe (10) die zusätzlich zu der sich in Betrieb befindlichen Umwälzpumpe (10) betriebene Entleerungspumpe (12) abgeschaltet und das Einlaßventil (16) geöffnet und danach wieder geschlossen wird.

3. Verfahren nach Anspruch 1 oder 2, **dadurch gekennzeichnet, daß** ein Füllstandssensor (19) die abzupumpende Flüssigkeitsmenge begrenzt, wobei die zusätzlich zu der von dem Füllstandssensor (19) begrenzten Flüssigkeitsmenge vorhandene, abzupumpende Spülflüssigkeitsmenge mittels der Drehzahl der Umwälzpumpe (10) festgelegt wird.

4. Haushalt-Geschirrspülmaschine zur Durchführung des Verfahrens nach Anspruch 1, mit einem Spülbehälter (4), der über eine mit einem Einlaßventil (16) versehene Frischwasserzuleitung (17) befüllt wird, mit einer Umwälzpumpe (10), die ansaugseitig mit dem Spülbehälter (4) und druckseitig mit wenigstens einer Sprüheinrichtung (7, 8) verbunden ist, mit einer Entleerungspumpe (12), die ansaugseitig mit dem Spülbehälter (4) und druckseitig mit einer Ablaufleitung (15) verbunden ist und mit einem Programmsteuergerät (2), das auch Steuereinrichtungen zum Steuern der Pumpen (10, 12) beinhaltet, **dadurch gekennzeichnet, daß** die Umwälzpumpe (10) einen Drehzahlsensor (18) aufweist und in ihrer Drehzahl veränderbar ist, und daß das Programmsteuergerät (2) so ausgebildet ist, daß während des Betriebes der Umwälzpumpe (10) aufgrund der Signale des Drehzahlsensors (18) das Einlaßventil (16) geöffnet und/oder geschlossen und/oder die Entleerungspumpe (12) in Betrieb gesetzt oder ausgeschaltet wird, und daß bei einem Teilaustausch der Spülflüssigkeit beide Pumpen (10, 12) betrieben werden, und daß mittels der Drehzahl der Umwälzpumpe (10) die abzupumpende und/oder die einzufüllende Spülflüssigkeitsmenge festgelegt wird.

5. Haushalt-Geschirrspülmaschine nach Anspruch 4, **dadurch gekennzeichnet, daß** das Programmsteuergerät (2) so ausgebildet ist, daß, bei einem Teilaustausch der Spülflüssigkeit aufgrund der Signale des Drehzahlsensors (18) die zusätzlich zu der sich in Betrieb befindlichen Umwälzpumpe (10) betriebene Entleerungspumpe (12) abgeschaltet und das Einlaßventil (16) geöffnet wird, und daß aufgrund der Signale des Drehzahlsensors (18) das Einlaßventil (16) geschlossen wird.

6. Haushalt-Geschirrspülmaschine nach Anspruch 4 oder 5, **dadurch gekennzeichnet, daß** die Haushalt-Geschirrspülmaschine (1a) einen Füllstandssensor (19) aufweist, der die abzupumpende Flüssigkeitsmenge begrenzt, wobei das Programmsteuergerät (2) so ausgebildet ist, daß, die zusätzlich zu der von dem Füllstandssensor (19) begrenzten Flüssigkeitsmenge vorhandene, abzupumpende Spülflüssigkeitsmenge mittels der Drehzahl der Umwälzpumpe (10) festgelegt wird.

## Claims

1. Method of operating a household dishwashing machine comprising a rinsing container (4) filled by way of fresh water feed duct (17) provided with an inlet valve (16), a circulating pump (10) connected at the intake side with the rinsing container (4) and at the pressure side with at least one spray device (7, 8), an emptying pump (12) connected at the intake side with the rinsing container (4) and at the pressure side with a drain duct (15), and a program control apparatus (2) also containing control devices for control of the pumps (10, 12), **characterised in that** both pumps (10, 12) are operated for a partial exchange of the rinsing liquid and that the rinsing liquid quantity to be pumped away and thereafter to be replenished is established by means of the rotational speed of the circulating pump (10), which is variable in its rotational speed.

2. Method according to claim 1, **characterised in that** in the case of a partial exchange of the rinsing liquid the emptying pump (12) operated additionally to the circulating pump (10) disposed in operation is switched off on the basis of the signals of a rotational speed sensor (18) of the circulating pump (10) and the inlet valve (16) is opened and thereafter closed again.

3. Method according to claim 1 or 2, **characterised in that** a filling state sensor (19) limits the liquid quantity to be pumped away, wherein the rinsing liquid quantity which is to be pumped away and is present additionally to the liquid quantity limited by the filling state sensor (19) is established by means of the rotational speed of the circulating pump (10).

4. Household dishwashing machine for carrying out the method according to claim 1, comprising a rinsing container (4) filled by way of a fresh water feed duct (17) provided with an inlet valve (16), a circulating pump (10) connected at the intake side with the rinsing container (4) and at the pressure side with at least one spray device (7, 8), an emptying pump (12) connected at the intake side with the rinsing container (4) and at the pressure side with a drain duct (15), and a program control apparatus (2) also containing control devices for control of the pumps (10, 12), **characterised in that** the circulating pump (10) comprises a rotational speed sensor (18) and is variable in its rotational speed, that the program control apparatus (2) is so constructed that during operation of the circulating pump (10) the inlet valve (16) is opened and/or closed and/or the emptying pump (12) is placed in operation or switched off on the basis of the signals of the rotational speed sensor (18), that the two pumps (10, 12) are operated for a partial exchange of the rinsing liquid and that the rinsing liquid quantity to be pumped away and/or to be replenished is established by means of the rotational speed of the circulating pump (10).

5. Household dishwashing machine according to claim 4, **characterised in that** the program control apparatus (2) is so constructed that in the case of a partial exchange of the rinsing liquid the emptying pump (12) operated additionally to the circulating pump (10) disposed in operation is switched off on the basis of the signals of the rotational speed sensor (18) and the inlet valve (16) is opened and that the inlet valve (16) is closed on the basis of the signals of the rotational speed sensor (18).

6. Household dishwashing machine according to claim 4 or 5, **characterised in that** the household dishwashing machine (1a) has a filling state sensor (19) which limits the liquid quantity to be pumped away, wherein the program control apparatus (2) is so constructed that the rinsing liquid quantity which is to be pumped away and is present additionally to the liquid quantity limited by the filling state sensor (19) is established by means of the rotational speed of the circulating pump (10).

## Revendications

1. Procédé de fonctionnement d'un lave-vaisselle domestique comprenant une cuve (4) qui est remplie par le biais d'une conduite (17) d'amenée d'eau fraîche pourvue d'une soupape d'admission (16), une pompe de circulation (10) qui est reliée à la cuve (4) sur le côté d'aspiration et à au moins un dispositif d'aspersion (7, 8) sur le côté refoulement, une pompe d'évacuation (12) qui est reliée à la cuve (4) sur le côté d'aspiration et à une conduite d'écoulement (15) sur le côté refoulement, et un appareil commutateur à programme (2) qui contient également des appareils commutateurs à commande pour commander les pompes (10, 12), **caractérisé en ce que** les deux pompes (10, 12) fonctionnent lors d'un renouvellement partiel du liquide de lavage, et **en ce que** la quantité de liquide de lavage à évacuer puis à réalimenter est fixée au moyen de la vitesse de rotation de la pompe de circulation (10), dont la vitesse de rotation est modifiable.

2. Procédé selon la revendication 1, **caractérisé en ce que** la pompe d'évacuation (12), qui fonctionne en plus de la pompe de circulation (10) en marche, est arrêté et la soupape d'admission (16 est ouverte puis est refermée, lors d'un renouvellement partiel du liquide de lavage, en réponse aux signaux d'un capteur de vitesse de rotation (18) de la pompe de circulation (10).

3. Procédé selon l'une des revendications 1 ou 2, **caractérisé en ce qu'**un capteur de niveau (19) limite la quantité de liquide devant être évacuée, la quantité de liquide de lavage présente devant être évacuée en plus de la quantité de liquide limitée par le capteur de niveau (19) étant fixée au moyen de la vitesse de rotation de la pompe de circulation (10).

4. Lave-vaisselle domestique pour l'exécution du procédé selon la revendication 1, comprenant une cuve (4) qui est remplie par le biais d'une conduite (17) d'amenée d'eau fraîche pourvue d'une soupape d'admission (16), une pompe de circulation (10) qui est reliée à la cuve (4) sur le côté d'aspiration et à au moins un dispositif d'aspersion (7, 8) sur le côté refoulement, une pompe d'évacuation (12) qui est reliée à la cuve (4) sur le côté d'aspiration et à une conduite d'écoulement (15) sur le côté refoulement, et un appareil commutateur à commande par programme (2) qui contient également des appareils commutateus à commande pour commander les pompes (10, 12), **caractérisé en ce que** la pompe de circulation (10) est pourvue d'un capteur de vitesse de rotation (18) et à une vitesse de rotation modifiable, et **en ce que** l' appareil commutateur à commande par programme (2) est exécuté de manière à ce que la soupape d'admission (16) s'ouvre et/ou se ferme et/ou la pompe d'évacuation (12) se mette en marche ou s'arrête, pendant le fonctionnement de la pompe de circulation (10), en réponse aux signaux du capteur de vitesse de rotation (18), et **en ce que** les deux pompes (10, 12) fonctionnent lors d'un renouvellement partiel du liquide de lavage, et **en ce que** la quantité de liquide de lavage devant être évacuée et/ou alimentée est fixée au moyen de la vitesse de rotation de la pompe de circulation (10).

5. Lave-vaisselle domestique selon la revendication 4, **caractérisé en ce que** l' appareil commutateur à commande par programme (2) est exécuté de manière à ce que la pompe d'évacuation (12), qui fonctionne en plus de la pompe de circulation (10) en marche, est arrêté et la soupape d'admission (16) est ouverte, lors d'un renouvellement partiel du liquide de lavage, en réponse aux signaux du capteur de vitesse de rotation (18), et **en ce que** la soupape d'admission (16) est fermée en réponse aux signaux du capteur de vitesse de rotation (18).

6. Lave-vaisselle domestique selon la revendication 4 ou 5, **caractérisé en ce que** le lave-vaisselle domestique (1a) est pourvu d'un capteur de niveau (19) qui limite la quantité de liquide à évacuer, l'appareil commutateur à commande par programme (2) étant exécuté de manière à ce que la quantité de liquide de lavage présente devant être évacuée en plus de la quantité de liquide limitée par le capteur de niveau (19) soit fixée au moyen de la vitesse de rotation de la pompe de circulation (10).
